Europäisches Patentamt

(19) European Patent Office

Office européen des brevets

(11) Publication number: **0 157 563 B1**

(12) **EUROPEAN PATENT SPECIFICATION**

(45) Date of publication of patent specification: **20.05.92**     (51) Int. Cl.5: **H01L  49/02**, B41J 2/32

(21) Application number: **85302032.9**

(22) Date of filing: **25.03.85**

(54) Thermal recording head and process for manufacturing wiring substrate therefor.

(30) Priority: **26.03.84 JP 56149/84**
**13.03.85 JP 49816/85**

(43) Date of publication of application:
**09.10.85 Bulletin  85/41**

(45) Publication of the grant of the patent:
**20.05.92 Bulletin  92/21**

(84) Designated Contracting States:
**DE FR GB IT NL**

(56) References cited:
**EP-A- 0 077 546**
**EP-A- 0 079 063**
**EP-A- 0 128 760**
**EP-A- 0 129 876**
**US-A- 4 241 103**

**PATENT ABSTRACTS OF JAPAN, vol. 5, no.**
**127 (M-83)[799], 15th August 1981; & JP-A-56**
**64 885 (TOKYO SHIBAURA DENKI K.K.)**
**02-06-1981**

(73) Proprietor: **FUJITSU LIMITED**
**1015, Kamikodanaka Nakahara-ku**
**Kawasaki-shi Kanagawa 211(JP)**

(72) Inventor: **Matsuzaki, Toshio**
**39-1313, Sakuradai Midori-ku**
**Yokohama-shi Kanagawa 227(JP)**
Inventor: **Sorimachi, Haruo**
**4-8-18 Kitashinjuku Shinjuku-ku**
**Tokyo 160(JP)**
Inventor: **Satoh, Kiyoshi**
**Tanokami Haitsu 103 20-6 Tanokami**
**Suzaka-shi Nagano 382(JP)**
Inventor: **Suzuki, Takumi**
**1550-30, Shimokurata-cho Totsuka-ku**
**Yokohama-shi Kanagawa 244(JP)**
Inventor: **Sugii, Takeshi**
**842-8, Futoo-cho Kouhoku-ku**
**Yokohama-shi Kanagawa 222(JP)**

(74) Representative: **Sunderland, James Harry et al**
**HASELTINE LAKE & CO Hazlitt House 28**
**Southampton Buildings Chancery Lane**
**London WC2A 1AT(GB)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

## Description

The present invention relates to a thermal recording head to be used for a thermal or heat transfer printer or facsimile. More particularly, the present invention relates to a multi-layer wiring structure of a film type thermal recording head provided with active elements, such as driver integrated circuits (IC's), at a high density.

The present invention also relates to a process for manufacturing a wiring substrate which can be advantageously used for a thermal recording head.

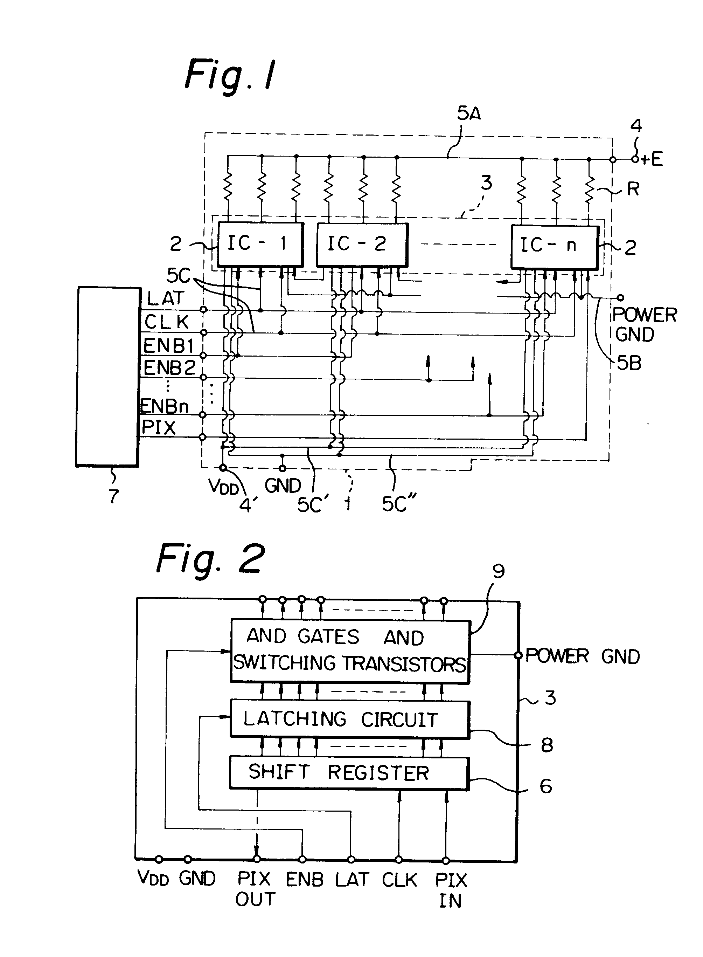

A thermal recording head (thermal head) of the above type ordinarily comprises a number of heat-generating parts (heat-generating elements) arranged in a line-dot pattern or matrix, each heat-generating part including a dot formed of a heat-generating resistor (resistor film) and a conductor (film) connected thereto. For example, in the line-dot arrangement, if a recording paper has, for example, a size A4, and the density of the heat-generating parts is 8 lines/mm, about 1728 heat-generating dots are linearly arranged as a whole. Accordingly, in the thermal head of this type, high-density wiring is required for supplying electricity to these heat-generating parts, and therefore, a multi-layer wiring structure becomes necessary. In the of an IC type thermal recording head for use with A4 size recording paper, the number of heat generating dots is, for example, 1728 as mentioned above, and the power voltage (designated by $+E$ in Fig. 1) is 12V. In this kind of thermal head, if the heat generating dots are divided into four groups to be driven, when all the dots are driven, namely when a recording electric current is supplied to all the dots, 50 mA of the current is supplied to each dot at most, but a large current of about 22A is supplied to the power supply lines. That is, a large current flows in the power supply lines, in comparison with each heat generating dot in which only a relatively small current flows.

A multi-layer wiring structure may be a thick film type (comprising a thick film conductor layer and a thick film insulator layer) or a thin film type (comprising a thin film conductor layer and a thin film separator layer). The former type is advantageous in that fabrication is easy, the manufacturing cost is cheap, the yield is high, and the reliability is high, but is defective in that the printed letter quality (the deviation of the resistance among dots and the resolving degree) is poor and the material cost is high (Au metal films should be used because of various limitations). The latter type is unsatisfactory in several points, but has the advantage of good quality printed letters (the deviation of the resistance among dots or the resolving degree). Accordingly, thin film type thermal heads are use to a great extent at present.

The wiring pattern of the thermal head of this type is typically divided into a diode matrix type and a driver IC-loaded type. Because of the wiring characteristics, the printing speed of the latter type is higher than that of the former, and thus the latter type has an advantage in this point. Accordingly, as means for simultaneously obtaining a good quality printed letter and a high printing speed, a thin film thermal head of the driver IC type has attracted attention, and investigations have been made on thermal heads of this type. Nevertheless, there are still problems with thermal heads of this type, especially for the multi-layer structure for multi-layer wiring, as described in the following text.

As pointed out above , high-density multi-layer wiring is necessary for a driver-loaded type thermal head provided with IC's and the like at a high density. In the conventional thin-film thermal heads of this type, the multi-layer structure for multi-layer wiring is constructed by laminating thin films. More specifically, this multi-layer structure is formed by alternately laminating a thin film conductor layer and a thin film insulator layer of an organic material such as a polyimide resin on a substrate composed of alumina or the like by vacuum deposition or the like. Although conventional thin film-type thermal heads fabricated in the above-mentioned manner are advantageous in that the printed letter quality is high and the printing speed is high, they still involve the following problems.

(1) Since pinholes are readily formed in a thin film of a polyimide resin and short circuits are often formed in insulation-required portions between conductors, the yield in the production process is very low. Accordingly, the number of layers is practically limited to two (the larger the number of layers, the lower the yield), when a thin film of a polyimide resin is used. Moreover, the process for the preparation of a polyimide resin is complicated, and hence, polyimide resin films are expensive.

(2) For the reasons set forth in (1) above, the manufacturing cost is increased and thus the cost of the thermal heads is increased.

(3) Since the conductor layer is in the form of a thin film, the conductor resistance is high. Accordingly, a special treatment is necessary for a power source supply line or power ground line (earth line) where a large electric current flows. For example, the conductor resistance is reduced by subjecting such a line to a plating treatment (the conductor is thickened) or to a partial vacuum deposition treatment, or the conductor resistance is reduced by complicating a pattern of the thin film and broadening the width of the pattern. Accordingly, where a thermal head is constructed by performing the above-mentioned special or additional treatment, designing of multi-layer wiring is very difficult. Moreover, the thermal head is poor in general-purpose characteristics. Namely, multi-layer wiring of a thermal head of a different (standard), type cannot be utilized for the present thermal head, and multi-layer wiring suitable for this thermal head must be especially designed.

In another conventional technique, in order to obviate the problems of the above-mentioned conventional technique, a portion including a terminal part where a large electric current flows is constructed by using a separately formed flexible printed plate. However, this flexible printed plate is very expensive and thus the manufacturing cost is increased, and therefore, this conventional technique is not satisfactory from the practical viewpoint.

According to still another conventional technique, a driver IC-loaded portion of multi-layer Wiring is formed having a thick film multi-layer structure, and a heat-generating dot portion is formed having a thin film structure, and both portions are electrically connected to each other by using a bonding wire or the like. In this case, however, the density of electric connecting points between the two portions is very high and the number of these electric connecting points is drastically increased (as pointed out hereinbefore, 1728 points for A4 recording paper), also no suitable connecting method is known and the reliability of the connecting points is extremely low. Therefore, this conventional technique cannot be practically applied. Furthermore, even if this conventional technique is practically carried out, the step number (number of manufacturing processes) is increased and thus the manufacturing cost is increased.

An embodiment of the present invention can solve the above-mentioned problems of the conventional techniques and provide a thermal recording head of the thin film type including a thin film resistor, in which a multilayer structure of a multi-layer wiring portion provided with active elements (such as driver IC's) at a high density can be fabricated very easily in a high yield, high-density wiring, high printing speed and high printed letter quality can be realized, and the manufacturing cost can be reduced. An embodiment of the present invention can provide a simple and inexpensive wiring substrate which has a high (enhanced) electrical property and which can be particularly advantageously used for a thermal recording head.

An embodiment of the present invention can provide a process for manufacturing a wiring substrate which is free from the drawbacks mentioned above.

EP-A-0 077 546 discloses a thermal recording device having the features of the preamble of accompanying claim 1, and a manufacturing process having the features of the preamble of accompanying claim 7.

US-A-4 241 103 discloses a thermal printing head having thin-film heating resistors and a thick-film wiring circuit. In one version of the printing head, two glass layers are stacked one on another, and edges of the upper glass layer overlap lead electrodes.

EP-A-0 079 063 discloses a thermal printing head in which the tape-automated-bonding (TAB) method is used to connect resistive heating elements to driving circuitry, and to connect driving circuitry to control electrodes.

According to a first aspect of the present invention, there is provided a thermal recording head having a multi-layer wiring structure provided with active elements, which comprises a substrate, a first conductor layer formed of a thick film and arranged on the substrate, a first insulator layer formed of a glass thick film and arranged on the first conductor layer, a heat-generating resistor layer formed of a thin film and partly arranged on the first insulator layer, a second conductor layer formed of a thin film and arranged on the resistor layer, and active elements; characterised in that: said active elements are arranged on the second conductor layer or on the first insulator layer, the first conductor layer is formed of a Cu thick film, and the first insulator layer is formed by a glass which has been sintered in an $N_2$ atmosphere.

According to a second aspect of the present invention, there is provided a process of manufacturing a wiring substrate of a thermal recording head, comprising; a first step of forming a lower layer of a first conductor pattern of a thick-film by applying and firing a metal paste on an insulation substrate; a second step of forming a glass insulator on the lower layer by applying and firing a glass paste; and a step of forming an upper layer of a second conductor pattern, which is electrically connected to the exposed surface of the first conductor pattern, on the glass insulator; characterised in that: said metal paste is a copper paste; said second step includes applying the glass paste onto the first conductor pattern so that at least a part of the conductor pattern is exposed, and then firing the glass paste in a basically inert gas atmosphere containing oxygen; and in that before said upper layer-forming step, there is performed a third step of removing oxide formed on the exposed surface of the first conductor pattern.

Reference is made, by way of example,
to the accompanying drawings, in which:

Fig. 1 is a circuit diagram of a direct drive thermal head to which the present invention may be applied;

Fig. 2 is a diagram of a drive circuit shown in Fig. 1;

Fig. 3 is a schematic partial plan view showing a first embodiment of the thermal recording head of the present invention, but in which the resistor protecting film, protecting layer and heat-resistant protecting resin shown in Fig. 4 are removed; Fig. 4 is a cross-sectional view showing the section taken along the line IV-IV-IV-IV in Fig. 3; Fig. 5 is a cross-sectional view of a second embodiment of the present invention, corresponding to Fig. 4;

Fig. 6 is a view showing the section taken along the line VI-VI in Fig. 5;

Fig. 7 is a diagram showing experimental results for the relationship of $O_2$-density of the inert gas atmosphere, in which the glass paste is fired, to the insulation resistance between the upper thin-film conductor layer and the lower thick-film conductor layer, and also to the sheet resistivity of the Cu thick-film conductor layer;

Fig. 8 is a schematic sectional view of a test sample used in the experiments;

Fig. 9 is a diagram of experimental results showing a relationship between the $O_2$ density and the throughhole resistance, in relation to various kinds of solvent in which the substrate is to be dipped to remove the copper oxide;

Fig. 10 is a diagram of experimental results showing a relationship between the type of surface treatment, i.e., the time of immersion in the solvent and the intensity of the adhesion of the Cu thick-film layer onto the substrate, in relation to the kinds of the solvent; and

Fig. 11 is a diagram of experimental results showing the relationship between the amount of organic acid to be contained in the solvent and the throughhole resistance, in relation to various kinds of organic acids.

Figure 1 is a circuit diagram for a direct drive thermal head, and Fig. 2 is a diagram of a drive circuit shown in Fig. 1.

The thermal recording head 1 has a plurality of integrated circuits 2, hereinafter referred to as IC-1, IC-2, ... IC-n, which form a drive circuit 3. The drive circuit 3 has a shift register 6 which stores picture signals fed from a terminal PIX-IN and which operates in response to a clock signal CLK, as shown in Fig. 2. The picture signal PIX includes dot signals corresponding to a desired letter or picture to be recorded. The drive circuit 3 also has a latching circuit 8 and switching circuit 9. The latching circuit 8 operates in response to a latch signal LAT to control the shift register 6. The switching circuit 9 operates in response to enable signals ENB (ENB1, ENB2, ... ENBn) to control the latching circuit 8 in such a manner that the dot signals are moved at one time to a common conductor 4 through heat generating resistors R. Namely, 4 designates a power source + E for supplying a heat generating current to the heat generating resistance 6; 4' designates a power source $V_{DD}$ for supplying drive current to the drive IC's 2; 5A a power supply line for the power source 4; 5B a ground line for the power source 4; 5C a matrix wiring for supplying control signals for the drive IC's 2; 5C' a power supply line for the power source 4'; and 5C'' a ground line for the power source 4'. Numeral 7 designates a control circuit of the thermal head 1. The current from the power source 4 flows through the power supply line 5A, a selected heat generating resistance R, driven switching transistors(9),to the grounded line 5B to effect a desired printing. (The construction per se mentioned above is known). The present invention is addressed to an internal construction of the thermal recording head 1.

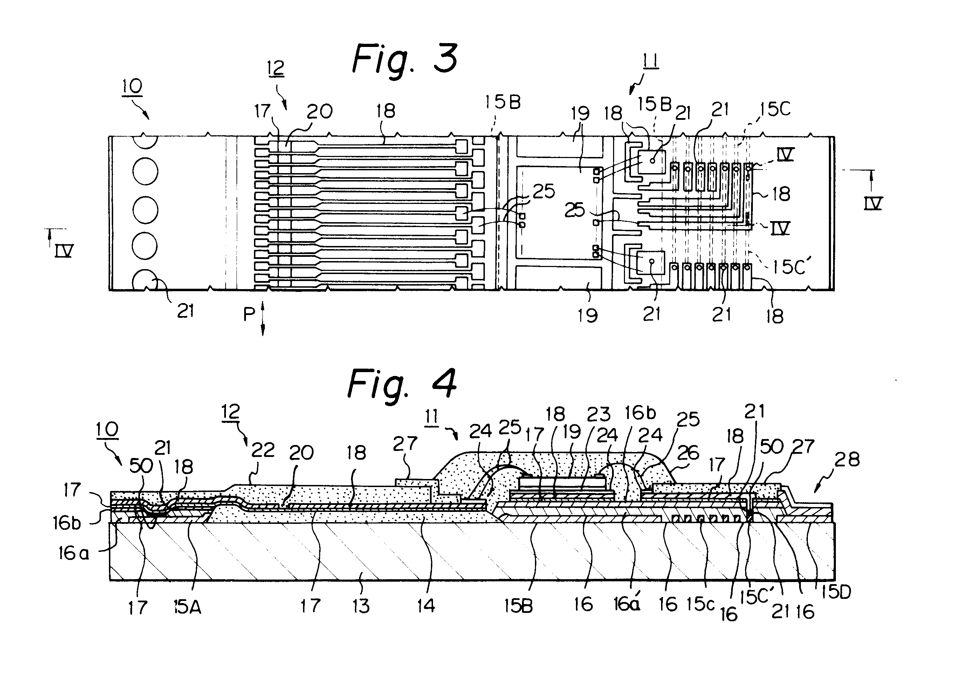

Figs. 3 through 6 are diagrams illustrating embodiments of the thermal recording head (thermal head) of the present invention.

Wiring components 15A, 15B, 15C, 15C', and 15C'' shown below in Figs. 3 to 6 correspond to 5A, 5B, 5C, 5C', and 5C'' in Figs. 1 and 2, respectively.

Figs. 3 and 4 show a thermal head 10 of a first embodiment of the present invention. In Fig. 3, a resistor protecting film 22, a protecting layer 26, and a heat-resistant protecting resin 27, shown in Fig. 4, are removed, and, practically, the structure is expanded in the direction of arrow P in the rectangular form. In Figs. 3 and 4, reference numerals 11, 12, 13, 14, 15, 16, 17, 18, 19, and 20 represent a multi-layer wiring portion, a heat-generating portion, an alumina substrate, a high-melting-point glaze layer, a first conductor layer, a first insulator layer, a heat-generating resistor layer, a second conductor layer, a driver IC (active element) and a heat-generating point (heat-generating element or heat radiative element), respectively. The present embodiment roughly comprises the multi-layer wiring portion 11 loaded with driver IC's 19 and the heat-generating portion 12 on which heat-generating points 20 are formed. The alumina substrate 13 is a plate composed of about 97% alumina and has a rectangular shape (the longitudinal direction agrees with the direction of arrow P). The high-melting-point glaze layer 14, i.e., heat insulating layer, having a high heat resistance is formed in advance below the resistor layer 17 on which the heat-generating points 20 are formed, that is, on the substrate 13 in the portion corresponding to the resistor layer 17, to prevent heat transmission from the heat generating element 20 to the substrate 13. The first conductor layer 15 is a thick film of Cu (copper) formed by screen printing with a Cu (copper) paste capable of being sintered in an inert gas (e.g., $N_2$ = nitrogen) atmosphere, subsequent preliminary drying, and sintering in a conveyer type nitrogen furnace. This first conductor layer is patterned and formed when there are printed a logic power source supply line ($V_{DD}$) 15C', a logic ground line 15C'', a head common electrode (power supply electrode) 15A, a power ground line (earth line) 15B, a connection terminal 15D, and matrix wiring electrodes (controlling electrodes, i.e., signal lines) 15C of an input line where the conductor resistance should be reduced because a large electric current flows. By thus constructing the first conductor layer 15 by a thick film of Cu, the area resistance (sheet resistivity) can be reduced to less than about 1/10 of the sheet resistivity in a conventional thin film conductor, and simultaneously, the manufacturing cost can be reduced (because the preparation step is simple).

Then, the first insulator layer 16 is formed on the first conductor layer 15 in the form of a glass thick film having exposed portions, i.e., throughholes or via-holes 21 by using a glass paste comprising a binder capable of being sintered in an inert gas (e.g., $N_2$) atmosphere containing a high density oxygen content. In this first insulator layer 16, throughholes 21 should be formed very precisely so as to connect the upper and lower conductor layers (15 and 18). For this purpose, the following contrivance is made in the present embodiment. This glass thick film 16 comprises at least two glass layers. A filler-containing crystalline glass layer for a thick film is formed as a first glass layer 16a by printing, and then a vitrous (amorphous) glass layer is laminated as a second glass layer 16b on the first glass layer 16a by printing, and these two glass layers are integrated to form the glass thick layer 16. A very smooth surface (top surface) is formed by the second glass layer 16b which has excellent flowability when heated. Through holes 21 of the first and second glass layers are formed at the time of printing. Preferably, the diameter of the throughholes 21 of the second glass layer are originally slightly larger than the diameter of the throughholes 21 of the first glass layer, in view of the flowability of the second glass layer 16b, so that when heated the throughholes 21 of the first and second glass layer become substantially identical to each other, resulting in a formation of precise throughholes. Thus, the upper and lower conductor layers (15 and 18) can be firmly connected to each other. By constructing the first insulating layer 16 by the thick glass film having the above-mentioned structure, there can be obtained a surface (top surface) having an excellent smoothness and a good insulating property. Moreover, formation of pinholes can be prevented substantially completely, and the yield can be improved. The very smooth face (top surface) makes it easier to form a fine pattern of a thin film thereon and improves the quality of this thin film. Incidentally, the first insulator layer also may be formed according to a method different from the above-mentioned method. More specifically, the first glass layer 16a may be formed by using an amorphous glass having a high softening point, and the second glass layer 16b may be formed by using an amorphous glass having a softening point lower than that of the first glass layer 16a. Also, in this case, the same effects as described above can be similarly attained. An example of formation of the above-mentioned first insulator layer 16 comprising a first glass layer of a crystallized glass and a second glass layer of an amorphous glass will now be described. At first, a first glass layer 16a is formed by repeating two times the printing and sintering of a filler-incorporated crystallized glass paste capable of being sintered at 600°C by using a 325-mesh screen. Then, a second glass layer 16b having throughholes having a minimum diameter of 250 $\mu$m and also having a very smooth surface (top surface) is formed by conducting once the printing and sintering of an amorphous glass paste capable of being sintered at 600°C by using a 325-mesh screen. Both the glass layers 16a and 16b are integrally laminated to form a first insulator layer 16.

In the course of firing the glass paste, in a basically inert gas atmosphere having an added oxygen content, the exposed surface of the first conductor layer 15 is oxidized, so that oxide is formed. To remove the oxide, the substrate having thereon the first conductor layer 15 and the glass insulator layers 16a and 16b is dipped or immersed in an organic solvent containing an organic acid, such as carbolic acid, hydroxy acids, or carboxylic acids, or a mixture thereof, so that the oxide is activated and removed. The organic solvent used is preferably selected from the group of halogenated hydrocarbons, and aromatic hydrocarbons. Preferably, the organic acid is used in the organic solvent in an amount of 3 to 50% by weight of the total weight.

The density of oxygen contained in the basically inert atmosphere is preferably 200 to 5000 ppm. After the oxide is removed, a heat-generating resistor layer 17 is formed as a thin film on the first insulator layer 16. According to an example of the formation of this resistor layer 17, $Ta_2N$ is deposited in a thickness of about 300 Å by the magnetron sputtering method. Then, a second conductor layer 18 is formed as a Cr-Cu-Cr thin film on the heat-generating resistor layer 17. According to an example of the formation of the second conductor layer 18, by vacuum deposition or the like, Cr is first deposited in a thickness of 300 Å, Cu is then deposited in a thickness of 5000 Å on the deposited Cr, and finally Cr is again deposited in a thickness of 300 Å on the deposited Cu, whereby a Cr-Cu-Cr thin film is formed.

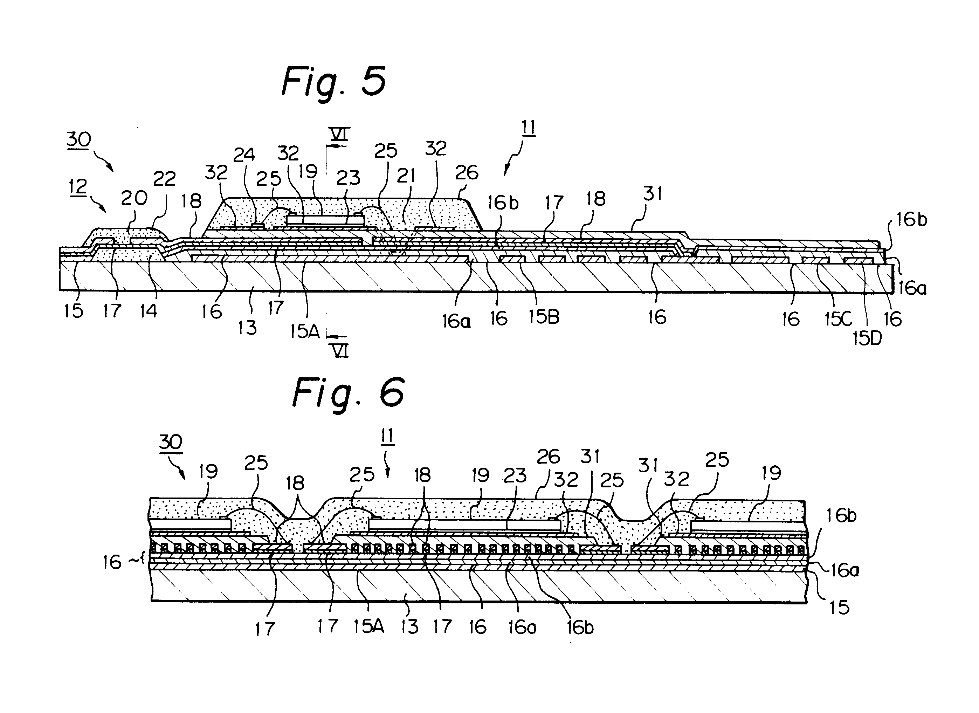

Cr is deposited as the topmost layer in the second conductor layer 18 because the adhesion between the resistor-protecting film 22 and this conductor layer 18 is thus improved. Then, pattern baking is carried out by using a negative type resist and only the Cr-Cu-Cr conductor is wet-etched to form a stripe pattern (see Fig. 3 and Fig. 6 described hereinafter).

In the present embodiment, as pointed out hereinbefore, the logic power source supply line, the logic ground line, the power ground line and the like are formed on the first conductor layer 15, and therefore, from the viewpoint of designing, the present embodiment is advantageous in that a fine pattern alone can be arranged on the second conductor layer 18 at a high efficiency. By reactive plasma etching using a $CF_4$-$O_2$ type gas, the $Ta_2N$ layer is removed between patterned conductors of Cr-Cu-Cr. Then, the resist is peeled, and for forming heat-generating points (heat-generating elements) 20, a resist is formed on the entire surface again, and a resist pattern opened only in resistor windows (corresponding to heat-generating points 20) is formed by baking. Subsequently, the Cr-Cu-Cr layer (second conductor layer 18) in the above-mentioned openings is removed by etching to form heat-generating points 20, that is, a thin film resistor. Note, the second conductor layer 18 may be formed by using a single layer or multi-layer of Al, NiCr-Au-Cr, Al(Si), Ti-Pd-Au, Ni-Au, NiCr, Cr, W, Ta, Cu, Ti, Ni, W-Al, Pd, or Au thin film instead of the above-mentioned Cr-Cu-Cr. However, where the second conductor layer 18 is formed by using NiCr-Au-Cr and the first conductor layer 15 is formed of Cu, the exposed surface of this Cu should be plated with Ni to protect the Cu surface from the etching medium used. That is, the exposed Cu surface may be also etched if it is not covered by such Ni plating. The Ni plating shown at 50 in Fig. 4 is formed after the glass insulator layers 16a and 16b are formed. In this embodiment, reference numeral 22 represents a resistor-protecting film (anti-abrasive layer) of the $SiO_2$-$Ta_2O_5 \cdot SiO_2$ type, and this protecting film 22 is formed in a thickness of, for example, about 4 $\mu$m, by RF (Radio Frequency) sputtering. The driver IC (active element) 19 is loaded and secured onto the second conductor layer 18 by using a conductor adhesive (electrically conductive die-bonding resin) 23 according to the die-bonding method. In order to improve the wire bondability, an Ni-Au plating layer is previously deposited on the second conductor layer 18 (for example, after etching and removal of the Cr of the bonding pad portion, electrolytic plating is carried out). Heat compression Au-to-Au wire bonding is carried out by using a bonding wire 25 (for example, an Au wire) to electrically connect the driver IC 19. As is apparent from the foregoing description, according to the present embodiment 10, the thermal head can be designed so that the driver IC and the like are not wire-bonded to an organic insulator which is mechanically and thermally weak, such as a polyimide resin, and therefore, a multi-layer structure having a very high reliability can be realized. Note, reference numeral 26 represents a protecting layer for the driver IC 19, which is formed of a silicone type resin. According to the above-mentioned procedures, the driver IC type thermal head is substantially constructed. Practically, however, the alumina substrate 11 is secured and loaded onto a rectangular heat sink (not shown), and an external terminal (not shown) is formed on this heat sink to complete fabrication of a driver IC type thermal head. Note, in Fig. 2, reference numerals 27 and 28 represent a heat-resistant protecting resin and a terminal portion, respectively.

As is apparent from the foregoing description, in the present embodiment, thin film layers and thick film layers are appropriately combined, and the multi-layer structure is formed by skillfully utilizing the merits of these layers.

Figure 5 is a cross-sectional view of a thermal head 30 of a second embodiment of the present invention (corresponding to Fig. 4 of the above mentioned first embodiment), and Fig. 6 is a view showing the section taken along the line VI-VI in Fig. 5 (corresponding to the view showing the section taken along the direction of arrow P in Fig. 3). In Figs. 5 and 6, members and portions identical or corresponding to the members and portions in Figs. 3 and 4 are indicated by the same reference numerals as in Figs. 3 and 4. Therefore, reference numerals 11, 12, 13, 14, 15, 16, 17, 18, 19, 20, 21, 22, 23, 24, 25, and 26 represent a multi-layer wiring portion, a heat-generating portion, an alumina substrate, a high-melting-point glaze layer, a first conductor layer, a first insulator layer, a heat-generating resistor layer, a second conductor layer, a driver IC (active element), a heat-generating point (heat-generating element), a throughhole, a resistor protecting layer (anti-abrasive anti-oxidation layer), a conductor adhesive (electrically conductive die-bonding resin), an Ni-Au plating layer, a bonding wire (Au wire), and a protecting layer for the driver IC 19, respectively. These members and portions are formed substantially in the same manner as in the above-mentioned first embodiment. Accordingly, explanation of these members and portions is omitted.

Reference numerals 31 and 32 represent a second insulator layer and a third conductor layer, respectively. The main difference of the present embodiment from the first embodiment resides in that the second insulator layer 31 and third conductor layer 32 are interposed between the second conductor layer 18 and the driver IC 19. If a small driver IC is used, wiring is ordinarily completed up to the second conductor layer 18 as in the above-mentioned first embodiment. However, if a large driver IC having a large current capacitance (or driver LSI) is used, pads on the IC are often distributed and arranged on the four peripheral portions (all four edges of the IC). Where an IC having such pad arrangement and size is loaded, a certain third conductor layer 32 becomes necessary. In the present second embodiment, an example of a driver IC-loaded thermal head having a multi-layer wiring portion 11 including such a third conductor layer 32 is constructed. A variety of large driver IC's having different pad arrangements have recently been developed. For example, there can be mentioned driver IC's where pads are arranged only on two confronting peripheral portions. Where a driver IC of this type is loaded, the third conductor layer 32 is not necessary, and multi-layer wiring is completed up to the first conductor layer 18 as in the above-mentioned first embodiment.

Referring to Figs. 5 and 6, the second insulator layer 31 is formed as a thick film on the second conductor 18 by using an organic insulator such as a polyimide resin. For example, this second insulating layer 31 composed of a polyimide resin is formed in the following manner. Ordinarily, a polyimide resin has a poor thixotropic property and hence, a low printability. Accordingly, an inorganic or organic powdery filler is incorporated into a polyimide resin so as to improve the thixotropic property, and the filler-incorporated polyimide resin is screen-printed to form the second insulator layer 31. In order to improve the insulating property between the conductor layers, the second insulator layer 31 is formed as a thick film having a thickness of about 15 $\mu$m. Then, the third conductor layer 32 is formed as a thin film on the second insulator layer 31. For example, this third conductor layer 32 is formed in the following manner. A Cr layer having a thickness of 300 Å is first formed on the entire surface by the vacuum deposition of Cr or the like means, and a Cu layer having a thickness of 1 $\mu$m is formed on the Cr layer. Then, this thin layer is patterned according to a method similar to the method adopted for formation of the second conductor layer 18, whereby the third conductor layer 32 is formed. Then, the driver IC 19 is loaded and secured to the third conductor layer 32 according to the same method as adopted in the first embodiment. The present embodiment is different from a previously proposed thin film multi-layer wiring structure constructed by using only a polyimide resin or the like for example in the point that since the wiring is mainly constructed by the first and second conductor layers (15 and 18), the wiring by the third conductor layer 32 can be simplified, with the result that the rejection rate of patterning can be reduced. Other effects of the present embodiment are substantially the same as those attained in the first embodiment.

As is apparent from the foregoing detailed description, in each of the foregoing embodiments, the multi-layer wiring portion is constructed by using a conductor composed mainly of Cu. This is because Cu is cheap and has a high electric conductivity (low conductor resistance) and a high heat resistance. The material of the heat-generating resistor 17 and the material of the protecting film 22 are not limited to the above-mentioned $Ta_2N$ and $SiO_2$-$Ta_2O_5 \cdot SiO_2$, but other appropriate materials can be used.

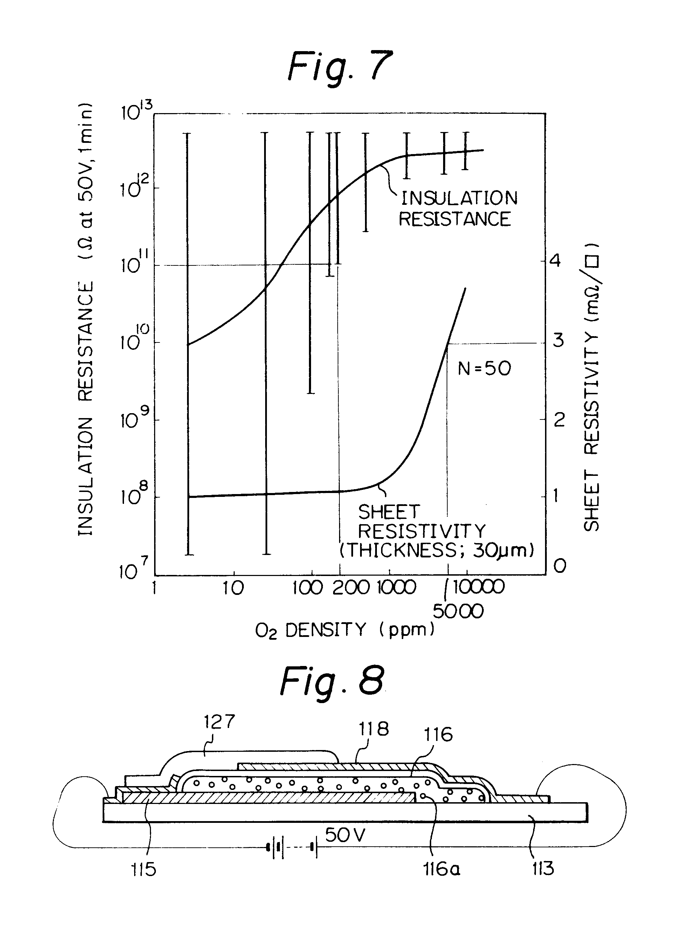

Figure 7 shows experimental results of characteristics of the ratios of $O_2$ density in the $N_2$ atmosphere for firing the glass paste to the insulation resistance between the upper thin-film conductor layer and the lower thick-film conductor layer and also to the sheet resistivity of the thick film conductor layer. The experiments were carried out by using a test sample as shown in Fig. 8, in which a Cu thick film conductor layer 115 which can be fired at a nominal firing temperature of 600° C was formed on the 96% alumina substrate 113. Crystallized glass 116a which can be fired at a nominal firing temperature of 600° C was printed and fired twice by using a 325 mesh stainless screen, and then vitrous glass 116b was printed and fired on the first glass layer 116a by using the 325 mesh stainless screen. Finally, an upper thick film conductor layer 118 of Cr-Cu was formed on the glass layer 116b. The upper conductor layer 118 was patterned by a photolithography process and then coated with a protective layer 127 of silicone resin. The initial insulation resistance between the thick-film conductor layer 113 and the thin-film conductor layer 118 was measured one minute after a voltage of 50 V was applied, in comparison with the variation of $O_2$ density at the so-called a burn out zone of the firing furnace. The sheet resistivity of the thick-film conductor layer was also measured.

As can be seen from Fig. 7, it was clear that the insulation resistance varied in accordance with the change in $O_2$ density and that the sheet resistivity varied greatly when the $O_2$ density exceeded about 1000 ppm.

It is thought that the upper limit of the sheet resistivity for achieving desired characteristics of the Cu thick-film conductor layer is 3 mΩ/□ (mΩ per square). This fact results in the condition that the $O_2$ density should be below 5000 ppm.

On the other hand it is also thought that the insulation resistance must be above $10^{11}\Omega$ to ensure reliability of the insulator. From this, it was derived that $O_2$ density should be above 200 ppm. In a known process the glass paste is usually fired in an $N_2$ atmosphere containing a low density $O_2$ below 5 ~ 50 ppm.

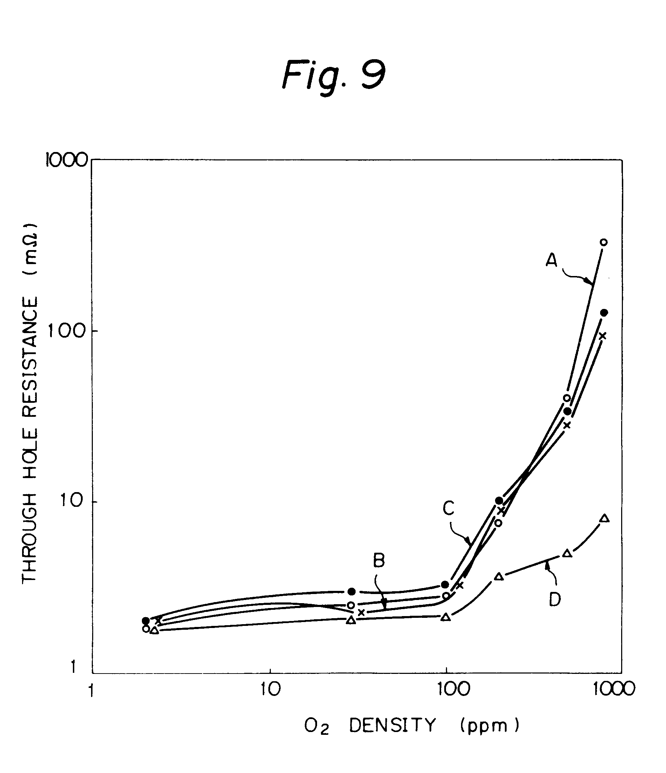

Figure 9 shows experimental results of a relationship between the throughhole resistance and the $O_2$ density at the burn-out zone, in the course of firing the glass paste. Various organic acid-containing solvents were used to remove the oxide formed on the thick-film conductor layer. In Fig. 9, A shows a known solvent which contains 4% by weight phosphoric acid, B a solvent of orthodichlorobenzene which contains no organic acid, and C shows no surface treatment, i.e., no step for removal of the oxide. D shows an embodiment of the present invention, in which a solvent of orthodichlorobenzene contains 20% carbolic acid by weight and 20% ABS (Alkylbenzene Sulphonate) as a surface-active agent. As can be seen from Fig. 9, D gave the best result for decreased throughhole resistance. This is because the oxide of Cu and the glass containing Pb can be weakly etched.

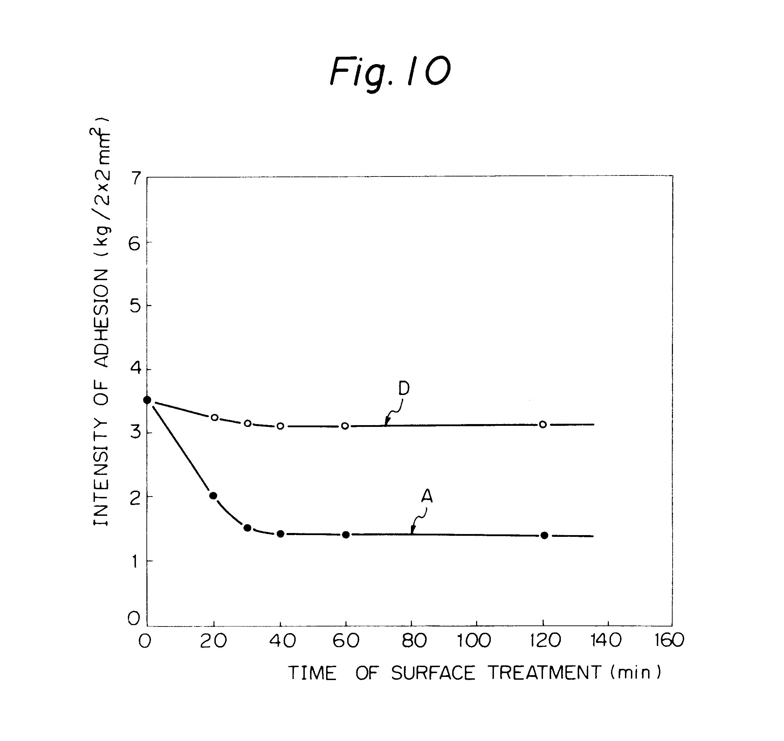

Figure 10 shows experimental results of a relationship between the time of surface treatment (time of immersion of substrate in the solvent) and the intensity of adhesion of Cu thick-film layer to the substrate. A shows the solvent of 4% phosphoric acid containing no organic acid, according to a known process. D shows an embodiment of the present invention in which the solvent of orthodichlorobenzene contains 20% carbolic acid and 20% ABS. As can be seen from Fig 10, according to the present invention, a decrease in the intensity of adhesion of the Cu thick-film layer to the substrate can be prevented.

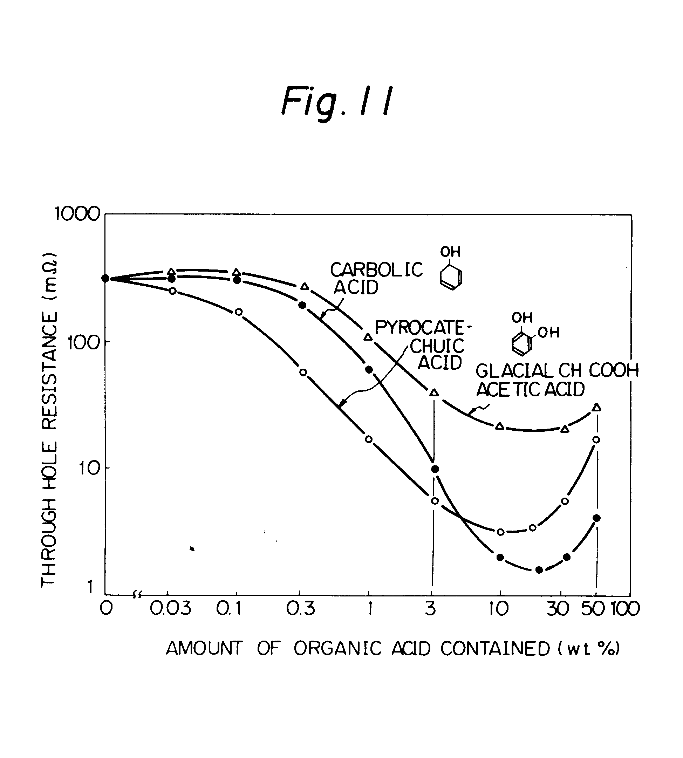

Figure 11 shows experimental results of the amount (weight %) of the organic acid contained in the solvent in relation to the throughhole resistance. The thick-film Cu layer was fired in the $N_2$ atmosphere containing 700 ppm of $O_2$. Copper oxide about 5000 Å in thickness was formed on the throughholes of the exposed Cu surface. Three kinds of organic acid, i.e., carbolic acid

$$( \circ\!\!-\!\!\circ ) ,$$

pyrocatechuic acid

$$( \circ\!\!-\!\!\circ ) ,$$

and glacial acetic acid

$$( \triangle\!\!-\!\!\triangle ) ,$$

were dissolved in the solvent of orthodichlorobenzene containing the ABS surface-active agent. The amounts of organic acids were changed. The thin-film conductor layer was formed after the surface treatment for removal of the copper oxide was carried out by immersion in three kinds of solvents containing three kinds of organic acids. The throughhole resistance was then measured.

As can be seen from Fig. 11, when the amounts of organic acids were 3 to 50% by weight, the throughhole resistance could be greatly decreased.

Finally, it was confirmed that the surface-active agent, i.e., ABS, contained in the solvent is only for improving the surface wetness and can be dispensed with.

As is apparent from the foregoing description, the thermal recording head of the present invention can be easily fabricated by appropriately combining thick film or thin film conductor layers and thick film insulator layers, forming the first insulator layer as a glass thick film and skillfully utilizing the merits of the thick and thin films. Moreover, the yield can be increased and the manufacturing cost can be reduced. Still further, high-density wiring, high printing speed, and high quality printed letters (high resolving degree) can be realized, and the reliability and performance can be improved.

**Claims**

1. A thermal recording head (10) having a multi-layer wiring structure provided with active elements, which comprises a substrate (13), a first conductor layer (15) formed of a thick film and arranged on the substrate, a first insulator layer (16) formed of a glass thick film and arranged on the first conductor layer, a heat-generating resistor layer (17) formed of a thin film and partly arranged on the first insulator layer (16), a second conductor layer (18) formed of a thin film and arranged on the resistor layer (17), and active elements (19); characterised in that:

   said active elements are arranged on the second conductor layer (18) or on the first insulator layer (16), the first conductor layer

(15) is formed of a Cu thick film, and the first insulator layer (16) is formed by a glass which has been sintered in an $N_2$ atmosphere.

2. A thermal recording head as set forth in claim 1, wherein the second conductor layer (18) is formed by using a single layer or multi-layer of Cr, NiCr, W, Ta, Ti, Ni, Cu, Au, Pd or Al thin film.

3. A thermal recording head as set forth in claim 1 or 2, wherein the first insulator layer (16) is a glass thick film having an integrally formed layered structure comprising a first glass layer (16a) formed of a crystalized glass and a second glass layer (16b) formed of an amorphous glass and arranged on the first glass layer.

4. A thermal recording head as set forth in claim 1 or 2, wherein the first insulator layer (16), is a glass thick film having an integrally formed layered structure comprising a first glass layer (16a) formed of an amorphous glass having a high softening point and a second glass layer (16b) formed of an amorphous glass having a softening point lower than that of the amorphous glass of the first glass layer and arranged on the first glass layer.

5. A thermal recording head according to any preceding claim, wherein said first insulator layer (16) is formed with throughholes so as to provide connections between the first conductor layer (15) and the second conductor layer (18), a nickel plating layer (50) being provided between the conductor layers at said connections.

6. A thermal recording head according to any preceding claim, further comprising a second insulator layer (31) formed of a thick film and arranged on the second conductor layer (18), and a third conductor layer (32) formed of a thin film and arranged on the second insulator layer (31), with the modification that said active elements are arranged on the third conductor layer (32) or on the second insulator layer (31).

7. A process of manufacturing a wiring substrate of a thermal recording head, comprising;
    a first step of forming a lower layer of a first conductor pattern (15) of a thick-film by applying and firing a metal paste on an insulating substrate (13);
    a second step of forming a glass insulator (16) on the lower layer by applying and firing a glass paste;
    and a step of forming an upper layer of a second conductor pattern (18), which is electrically connected to the exposed surface of the first conductor pattern (15), on the glass insulator (16); characterised in that:
    said metal paste is a copper paste;
    said second step includes applying the glass paste onto the first conductor pattern (15) so that at least a part of the surface of the conductor pattern is exposed, and then firing the glass paste in a basically inert gas atmosphere containing oxygen;
    and in that before said upper layer-forming step, there is performed a third step of removing oxide formed on the exposed surface of the first conductor pattern (15).

8. A process according to claim 7, wherein the density of oxygen contained in the inert gas atmosphere is 200 to 5000 ppm.

9. A process according to claim 7 or 8, wherein said third step comprises immersing the substrate (13) having thereon the first conductor pattern (15) and the glass insulator (16) in an organic solvent which contains organic acid, to activate the exposed surface of the first conductor pattern (15) in order to remove the oxide.

10. A process according to claim 7, 8 or 9, wherein said upper layer of the second conductor pattern (18) is formed by a thin-film process.

11. A process according to claim 7, 8, 9 or 10, wherein said inert gas atmosphere contains nitrogen as an inert gas.

12. A process according to any of claims 7 to 11, wherein said organic solvent is selected from the group of halogenated hydrocarbons, and aromatic hydrocarbons, and contains at least one organic acid selected from the group of carbolic acid, hydroxy acids, and carboxylic acids in a total amount of 3 to 50% by weight.

13. A process according to any of claims 7 to 12, wherein said second conductor pattern (18) is formed by etching.

14. A process according to claim 13, further comprising an additional step of forming a protective layer (50) on the exposed surface of the first conductor pattern (15) for protecting the exposed surface from the etching medium used, prior to the upper layer-forming step.

**15.** A process according to claim 14, wherein said protective layer (50) is a nickel plating coated on the exposed surface of the first conductor pattern (15).

## Revendications

**1.** Tête d'enregistrement thermique (10) ayant une structure de connexion multicouches munie d'éléments actifs, qui comporte un substrat (13), une première couche conductrice (15) fabriquée à partir d'un film épais et disposée sur le substrat, une première couche isolante (16) fabriquée à partir d'un film épais en verre et disposée sur la première couche conductrice, une couche résistive (17) génératrice de chaleur fabriquée à partir d'un film fin et disposée partiellement sur la première couche isolante (16), une seconde couche conductrice (18) fabriquée à partir d'un film fin et disposée sur la couche résistive (17), et des éléments actifs (19) ; caractérisée en ce que

lesdits éléments actifs sont disposés sur la seconde couche conductrice (18) ou sur la première couche isolante (16), en ce que la première couche conductrice (15) est fabriquée en un film épais de cuivre Cu, et en ce que la première couche isolante (16) est fabriquée en un verre qui a été fritté sous une atmosphère d'azote $N_2$.

**2.** Tête d'enregistrement thermique selon la revendication 1, dans laquelle la seconde couche conductrice (18) est formée en utilisant une couche unique ou une multicouches de films fins en Cr, NiCr, W, Ta, Ti, Ni, Cu, Au, Pd et Al.

**3.** Tête thermique d'enregistrement selon la revendication 1 ou 2, dans laquelle la première couche isolante (16) est un film épais en verre ayant une structure en couches fabriquées de manière intégrale, comprenant une première couche de verre (16a) fabriquée en un verre cristallisé et une seconde couche de verre (16b) fabriquée en un verre amorphe et disposée sur la première couche de verre.

**4.** Tête d'enregistrement thermique selon la revendication 1 ou 2 dans laquelle la première couche isolante (16) est un film épais en verre ayant une structure en couches fabriquée de façon intégrale et comprenant une première couche de verre (16a) fabriquée en un verre amorphe ayant un point de ramollissement élevé et une seconde couche de verre (16b) fabriquée en un verre amorphe ayant un point d'amollissement inférieur à celui de la première couche de verre et disposée sur la première couche de verre.

**5.** Tête d'enregistrement thermique selon l'une quelconque des revendications précédentes, dans laquelle ladite première couche isolante (16) est fabriquée avec des trous de passage de façon à fournir des connexions entre la première couche conductrice (15) et la seconde couche conductrice (18), une couche de placage de nickel (50) étant disposée entre les couches conductrices sur lesdites connexions.

**6.** Tête d'enregistrement thermique selon l'une quelconque des revendications précédentes, comprenant de plus une première couche isolante (31) formée en un film épais et disposée sur la seconde couche conductrice (18), et une troisième couche conductrice (32) fabriquée sur un film fin et montée sur la seconde couche isolante (31), avec la modification que lesdits éléments actifs sont disposés sur la troisième couche conductrice (32) ou sur la seconde couche isolante (31).

**7.** Procédé de fabrication d'un substrat de connectique pour tête d'enregistrement thermique comprenant: une première étape de fabrication d'une couche inférieure d'un premier schéma conducteur (15) sur un film épais en appliquant et en faisant fondre une pâte métallique sur un substrat isolant (13) ;

une seconde étape de fabrication d'un isolant (16) en verre sur la couche inférieure en appliquant et en faisant fondre une pâte de verre ;

et une étape de formation d'une couche supérieure d'un second schéma conducteur (18), qui est électriquement connecté à la surface exposée ou libre du premier schéma conducteur, sur l'isolant en verre (16) ; caractérisé en ce que:

ladite pâte métallique est une pâte de cuivre ;

ladite seconde étape comporte l'application de la pâte de verre sur le premier schéma conducteur (15) de telle sorte qu'au moins une partie du schéma conducteur est exposée, et ensuite en faisant fondre la pâte de verre sous une atmosphère de gaz inerte contenant de l'oxygène ;

et en ce que avant ladite étape de formation de couche supérieure, on exécute une troisième étape de retrait de l'oxyde formé sur la surface exposée du premier schéma conducteur (15).

**8.** Procédé selon la revendication 7, dans lequel la densité en oxygène contenu dans l'atmosphère de gaz inerte est de 200 à 5000 ppm.

**9.** Procédé selon la revendication 7 ou 8 selon lequel ladite troisième étape comporte l'immersion du substrat (13) sur lequel est déposé le premier schéma conducteur (15) et l'isolant en verre (16) dans un solvant organique qui contient un acide organique pour activer la surface exposée du premier schéma conducteur (15) afin de retirer l'oxyde.

**10.** Procédé selon la revendication 7, 8 ou 9 dans lequel ladite couche supérieure du second schéma conducteur (18) est fabriquée par un procédé à film fin.

**11.** Procédé selon les revendications 7 à 10 dans lequel ladite atmosphère de gaz inerte contient de l'azote comme gaz inerte.

**12.** Procédé selon l'une quelconque des revendications 7 à 11, dans lequel ledit solvant organique est sélectionné dans le groupe des hydrocarbones halogénés et des hydrocarbones aromatiques et contient au moins un acide organique sélectionné dans le groupe de l'acide phénolique, des acides hydroxy et des acides carboxyliques dans une quantité totale de 3 à 50% en poids.

**13.** Procédé selon l'une quelconque des revendications 7 à 12, dans lequel ledit second schéma conducteur (18) est fabriqué par gravure.

**14.** Procédé selon la revendication 13, comprenant de plus une étape additionnelle de fabrication d'une couche protectrice (50) sur la surface exposée du premier modèle conducteur (15) pour protéger la surface exposée du moyen de gravure utilisé, avant l'étape de fabrication de la couche supérieure.

**15.** Procédé selon la revendication 14, caractérisé en ce que ladite couche protectrice (50) est un placage en nickel déposé sur la surface exposée du premier schéma conducteur (15).

**Patentansprüche**

**1.** Thermischer Aufzeichnungskopf (10) mit einer Mehrschicht-Verdrahtungsstruktur, die aktive Elemente aufweist, mit einem Substrat (13), einer ersten Halbleiterschicht (15), die aus einem Dickfilm gebildet und auf dem Substrat angeordnet ist, einer ersten Isolatorschicht (16), die auf einem Glas-Dickfilm gebildet und auf der ersten Leiterschicht angeordnet ist, einer wärmeerzeugenden Widerstandsschicht (17), die aus einem Dünnfilm gebildet und teilweise auf der ersten Isolatorschicht (16) angeordnet ist, einer zweiten Leiterschicht (18), die aus einem Dünnfilm gebildet und auf der Widerstandsschicht (17) angeordnet ist, und aktiven Elementen (19), dadurch gekennzeichnet, daß:

die aktiven Elemente auf der zweiten Leiterschicht (18) und auf der ersten Isolatorschicht (16) angeordnet sind, die erste Leiterschicht (15) aus einem Cu-Dickfilm gebildet ist und die erste Isolatorschicht (16) durch ein Glas gebildet ist, welches in einer $N_2$-Athmosphäre gesintert worden ist.

**2.** Thermischer Aufzeichnungskopf nach Anspruch 1, bei dem die zweite Leiterschicht (18) durch Verwendung einer einzelnen Schicht oder einer Mehrfachschicht aus Cr-, NiCr-, W-, Ta-, Ti-, Ni-, Cu-, Au-, Pd- oder Al-Dünnfilm gebildet ist.

**3.** Thermischer Aufzeichnungskopf nach Anspruch 1 oder 2, bei dem die erste Isolatorschicht (16) ein Glas-Dickfilm ist, der eine einstückig geformte Schichtstruktur hat, die eine erste Glasschicht (16a) umfaßt, die aus kristallisiertem Glas besteht, und eine zweite Glasschicht (16b), die aus amorphem Glas gebildet und auf der ersten Glasschicht angeordnet ist.

**4.** Thermischer Aufzeichnungskopf nach Anspruch 1 oder 2, bei dem die erste Isolatorschicht (16) ein Glas-Dickfilm ist, der eine einstückig gebildete Schichtstruktur hat und eine erste Glasschicht (16a) umfaßt, die aus amorphem Glas gebildet ist, das einen hohen Erweichungspunkt hat, und eine zweite Glasschicht (16b), die aus einem amorphem Glas gebildet ist, das einen Erweichungspunkt hat, der niedriger als jener des amorphen Glases der ersten Glasschicht ist, und auf der ersten Glasschicht angeordnet ist.

**5.** Thermischer Aufzeichnungskopf nach einem der vorhergehenden Ansprüche, bei dem die erste Isolatorschicht (16) mit Durchgangslöchern so ausgebildet ist, daß Verbindungen zwischen der ersten Leiterschicht (15) und der zweiten Leiterschicht (18) vorgesehen sind, und eine Nickelplattierungsschicht (50) zwischen den Leiterschichten bei den genannten Verbindungen vorgesehen ist.

6. Thermischer Aufzeichnungskopf nach einem der vorhergehenden Ansprüche, ferner mit einer zweiten Isolatorschicht (31), die aus einem Dickfilm gebildet ist und auf der zweiten Leiterschicht (18) angeordnet ist, und einer dritten Leiterschicht (32), die aus einem Dünnfilm gebildet und auf der zweiten Isolatorschicht (31) angeordnet ist, mit Modifikationen dahingehend, daß aktive Elemente auf der dritten Leiterschicht (32) oder auf der zweiten Isolatorschicht (31) angeordnet sind.

7. Verfahren zur Herstellung eines Verdrahtungssubstrates eines thermischen Aufzeichnungskopfes mit:

einem ersten Schritt zur Bildung einer unteren Schicht aus einem ersten Leitermuster (15) aus einem Dickfilm durch Aufbringen und Feuern einer Metallpaste auf einem isolierenden Substrat (13);

einem zweiten Schritt des Bildens eines Glasisolators (16) auf der unteren Schicht, durch Aufbringen und Feuern einer Glaspaste;

und einem Schritt des Bildens einer oberen Schicht aus einem zweiten Leitermuster (18), welche elektrisch mit der exponierten Oberfläche des ersten Leitermusters (15) verbunden ist, auf dem Glasisolator (16); dadurch gekennzeichnet, daß:

die Metallpaste eine Kupferpaste ist;

der zweite Schritt das Aufbringen der Glaspaste auf das erste Leitermuster (15) enthält, so daß wenigstens ein Teil der Oberfläche des Leitermusters exponiert ist, und dann Zünden der Glaspaste in einer im wesentlichen inerten Gasathmosphäre, die Sauerstoff enthält;

und daß vor dem genannten Schritt des Bildens der oberen Schicht ein dritter Schritt zur Entfernung von Oxyd vorgesehen ist, welches auf der exponierten Oberfläche des ersten Leitermusters (15) gebildet ist.

8. Verfahren nach Anspruch 7, bei dem die Dichte des Sauerstoffs, der in der inerten Gasathmosphäre enthalten ist, 200 bis 5000 ppm ist.

9. Verfahren nach Anspruch 7 oder 8, bei dem der dritte Schritt das Eintauchen des Substrates (13) umfaßt, auf welchem das erste Leitermuster (15) und der Glasisolators (16) sind, in ein organisches Lösungsmittel, welches organische Säure enthält, um die exponierte Oberfläche des ersten Leitermusters (15) zu aktivieren, um das Oxyd zu entfernen.

10. Verfahren nach Anspruch 7, 8 oder 9, bei dem die obere Schicht des zweiten Leitermusters (18) durch ein Dünnfilmverfahren gebildet wird.

11. Verfahren nach Anspruch 7, 8, 9 oder 10, bei dem die inerte Gasathmosphäre Stickstoff als intertes Gas enthält.

12. Verfahren nach einem der Ansprüche 7 bis 11, bei dem das organische Lösungsmittel ausgewählt ist aus der Gruppe von halogenierten Kohlenwasserstoffen und aromatischen Kohlenwasserstoffen und wenigstens eine organische Säure enthält, die ausgewählt ist aus der Gruppe aus Karbolsäure, Hydroxylsäuren und Karboxylsäuren in einem Gesamtbetrag von 3 bis 50 Gewichtsprozent.

13. Verfahren nach einem der Ansprüche 7 bis 12, bei dem das zweite Leitermuster (18) durch Ätzen geformt ist.

14. Verfahren nach Anspruch 13, ferner mit einem zusätzlichen Schritt des Bildens einer Schutzschicht (50) auf der exponierten Oberfläche des ersten Leitermusters (15), um die exponierte Oberfläche gegen das verwendete Ätzmedium zu schützen, vor dem Schritt der Formung der oberen Schicht.

15. Verfahren nach Anspruch 14, bei dem die Schutzschicht (50) eine Nickelplattierung ist, die auf der exponierten Oberfläche des ersten Leitermusters (15) überzogen ist.

# *Fig. 1*

# *Fig. 2*

Fig. 3

Fig. 4

Fig. 5

Fig. 6

# Fig. 7

# Fig. 8

# Fig. 9

## Fig. 10

# Fig. 11